# DEMANDE DE BREVET EUROPEEN

(11) **EP 1 035 524 A2**
(43) Date de publication de la demande: **13.09.2000**
(21) Numéro de dépôt: 99430031.7
(22) Date de dépôt: 25.11.1999
(51) Int. Cl.: G07F 7/12

(54) **Cartes à puce et sytèmes d'échange de données sécurisés notamment pour paiements**

(30) Priorité: 10.03.1999 FR 9903130; 15.10.1999 FR 9912994
(71) Demandeur: Baron, Denis Philippe, 13580 La Fare les Oliviers (FR)
(72) Inventeur: Baron, Denis Philippe, 13580 La Fare les Oliviers (FR)

(57) **Abrégé**

L'échange de données informatiques confidentielles, l'obtention d'une autorisation d'accès, le paiement par carte à puce, sur place ou à distance par l'intermédiaire d'un réseau pose le problème de la sécurisation, par exemple, indiquer son code personnel c'est risquer de le voir réutilisé délictueusement.

Un des principes de l'invention consiste à stocker un grand nombre de codes sur le support servant à un échange d'informations ou à un paiement et à utiliser un code différent pour chaque opération réalisée. Ainsi si un code est intercepté, il ne peut être réutilisé.

D'autres moyens sont mis en oeuvre contre le piratage.

L'identification du possesseur du support peut se faire par un "dispositif secondaire" indispensable au fonctionnement du support, dissimulable, sans lequel le support ne fonctionne pas si on l'éloigne par exemple à plus d'un mètre. L'invention vise à proposer de nouveaux supports (cartes de paiement, porte-monnaie électroniques, disques à lecture optique et/ou magnétique...) et de nouveaux systèmes d'exploitation sécurisés sans utiliser nécessairement de nouveaux lecteurs de supports.

D'autre part de nouveaux supports, dissimulables même pendant leur utilisation, fonctionnant grâce à un lecteur approprié, permettent de se passer de l'utilisation des cartes à puce ou des porte-monnaie électroniques classiques.

## Description

La présente invention se situe dans le domaine de la reconnaissance des intervenants et de la sécurisation des échanges de données informatiques principalement entre ordinateurs qui se transmettent des données numériques en clair, codées ou cryptées notamment en vue d'un paiement électronique ou d'un télépaiement.

Quel que soit le niveau de complexité ou de sophistication d'un système de sécurisation de télépaiement ou de paiement sur place utilisant une certification comportant un échange de données même cryptées ou créant ou reconnaissant une signature numérique, la communication, le transfert de données peuvent toujours être piratés pour être utilisés délictueusement avec des matériels de plus en plus sophistiqués et des pirates de plus en plus ingénieux lorsqu'il s'agit de données, de codes ou de signatures numériques pouvant être réutilisés. Le piratage peut s'en prendre aux ordinateurs eux-mêmes par exemple avec l'intrusion de virus du type "cheval de Troie" qui permettent, entre autres, de reconnaître et stocker un code secret lorsqu'il est utilisé dans l'ordinateur pour ensuite en expédier délictueusement une copie vers un autre ordinateur; ce piratage peut s'en prendre aussi aux communications entre les ordinateurs (ou les périphériques tels que lecteurs de cartes à puces) quelles que soient les voies utilisées (lignes téléphoniques électriques, fibres optiques, liaisons satellites ou autres).
La réutilisation délictueuse de données piratées à l'insu des utilisateurs légitimes de ces données est le point faible de la sécurisation des échanges de données numériques et particulièrement de tout moyen de paiement électronique ou de télépaiement.

Afin de remédier à ces inconvénients et selon une première caractéristique, le dispositif selon l'invention comporte un support qui utilise des données en vue de la sécurisation ne pouvant être exploitées qu'un nombre limité de fois et de préférence une seule fois. Ces données sont de préférence stockées sous la forme d'un grand nombre de codes sur ledit support utilisé pour l'échange (par exemple un paiement), de préférence disposés dans une seule liste et ne pouvant être exploités qu'un nombre limité de fois et de préférence une seule fois. De préférence dans le système informatique du destinataire, un deuxième stockage de données identiques à celles stockées sur ledit support et dans le même ordre permet d'identifier chaque code proposé comme provenant bien dudit support. Chaque fois qu'un code est échangé entre deux dispositifs informatiques, il est comptabilisé pour ne servir qu'un nombre de fois prédéterminé, ce nombre de fois étant atteint, il est rendu inutilisable, c'est le/les code(s) suivant(s) dans la liste des codes qui sera(seront) utilisable(s) pour l'échange suivant. Pour une sécurisation plus importante, le nombre de fois qu'un même code est utilisable est réduit de préférence à une seule fois. Ainsi de telles données interceptées délictueusement seront difficilement réutilisables et même inutilisables, par un pirate, si ces données ne sont utilisables qu'une seule fois. D'autre part, plusieurs versions produisant des modes de réalisation différents seront décrits plus loin.

Dans toute la présente description ainsi que dans les revendications, les termes suivants sont utilisés selon la définition indiquée pour la compréhension mais non restrictive:
- autorité: individu ou organisation qui émet et/ou gère l'utilisation des supports en vue de l'acceptation ou du refus d'une authentification et/ou d'un paiement et/ou d'un télépaiement; dans certains cas l'autorité peut être de surcroît directement concernée par l'échange de données sous forme par exemple d'un message, en tant qu'émetteur ou en tant que récepteur tout en assurant la sécurisation de l'échange; dans le cas d'un échange entre des particuliers, entre des entreprises, de particulier à entreprise ou entre d'autres entités, l'un des intervenants peut être l'autorité ou même les deux intervenants, permettant une authentification mutuelle,
- banque: c'est dans certains cas l'autorité; elle peut déléguer tout ou partie de ses pouvoirs à une tierce partie qui devient l'autorité dans le système de sécurisation des échanges,
- commerçant: fournisseur de produits et/ou de services,
- code: il peut s'agir d'au moins un mot, au sens informatique, et/ou d'au moins un algorithme et/ou d'un assemblage de données numériques sous quelque forme que ce soit, permettant d'identifier ou d'être identifié, lors d'un échange, par son apparence, sa forme qui peut être comparée à un assemblage de données numériques témoin.
- échange: envoi de données numériques d'un émetteur vers un récepteur; la communication de données peut se faire dans les deux sens pendant le même échange et permet l'envoi de messages, codes,...afin de réaliser une opération complète comme un paiement ou une autorisation d'accès, avec vérifications sur les intervenants; l'échange peut s'effectuer sur place par le porteur par exemple par un paiement par carte à puce, ou à distance par exemple par l'intermédiaire d'un ordinateur relié à un autre ordinateur par une ligne téléphonique,
- numérique: est employé dans le sens du système qui est employé par les ordinateurs, en principe le système binaire, et qui peut être représenté par d'autres systèmes (octal, hexadécimal,...) ou complété ou remplacé par un système à valeurs intermédiaires issu de la logique floue,
- pirate: un individu ou un groupe qui commet des actes délictueux afin de tenter de détourner, de s'approprier des informations confidentielles pour elles-mêmes ou pour se substituer à un commerçant, à un porteur ou à une autorité pour détourner des fonds à son profit; il peut agir à tous les niveaux d'un échange: vol d'un support, intrusion dans les échanges informatiques pour produire de faux supports ou de fausses données informatiques...,
- porteur: c'est le possesseur authentique d'un support avec lequel il peut effectuer des échanges avec un commerçant, avec sa banque ou avec une autre entité, sur place ou à distance,
- support: dispositif où l'on peut inscrire en mémoire des données informatiques et comportant également des fonctions permettant, entre autres, d'effectuer des échanges; le support peut être une carte, de préférence de type carte bancaire, ou un porte-monnaie électronique, ou un disque (disquette, CD ROM ou autre) à lecture magnétique et/ou optique ou un objet quelconque (bague, montre, monture de lunettes, porte-clés, pendentif, ...) pouvant intégrer ou porter un système informatique nécessaire à un échange sécurisé par l'intermédiaire d'un dispositif informatique tel qu'un ordinateur avec ou sans l'aide d'un lecteur. Le support peut aussi être autonome, à l'exception éventuellement d'une source d'énergie, et se passer de l'intermédiaire d'un ordinateur pour effectuer des échanges avec des matériels informatiques. Les échanges peuvent se faire avec ou sans contact électrique entre le support et tout autre matériel électronique ou informatique.

Selon des modes particuliers de réalisation:
- les codes peuvent être extraits d'au moins une liste de codes:
   1) de manière aléatoire et couplés à des données complémentaires afin de pouvoir les comparer aux mêmes codes d'une liste témoin,
   2) d'après un plan préétabli ou établi lors de l'échange et couplés à des données complémentaires afin de pouvoir les comparer aux mêmes codes d'une liste témoin,
- le support n'est utilisable que par l'intermédiaire d'un petit nombre d'ordinateurs particuliers (de préférence un seul ordinateur) pour réaliser des échanges.
- l'utilisation du support peut être soumise à un code variable propre au possesseur du support.
- un code piégé peut interdire l'utilisation du support en cas de tentative d'utilisation de ce code.
- un dispositif de détection utilisant par exemple au moins un signal d'horloge ou tout autre signal ayant la même fonction peut être associé au système pour s'assurer que chaque échange est transmis en totalité, en temps réel et sans interruption, les caractéristiques de ce signal d'horloge ou de tout autre signal ayant la même fonction peuvent présenter des variations prévues, de préférence secrètes.
- le support peut ne fonctionner, lorsqu'il est sollicité pour un échange, que si l'autorité lui adresse au moins un code, qui change de préférence à chaque échange ou tentative d'échange que ledit support reconnait, authentifiant l'autorité, après quoi seulement il produit des données d'identification que l'autorité devra reconnaître en vue d'une authentification mutuelle,
- l'identification du porteur peut se faire par plusieurs moyens dont un dispositif secondaire indispensable au fonctionnement du support,
- le support peut être sans contact et dissimulable ainsi que le dispositif secondaire auquel il est associé,
- le support et/ou le dispositif secondaire peut/peuvent être présents dans un implant.

Dans un premier mode de réalisation nullement limitatif, le dispositif objet de l'invention se présente sous la forme d'un support pouvant, notamment, stocker une grande quantité de données numériques de préférence sous forme de codes qui sont disposés dans au moins une liste rendue inaccessible à la consultation et/ou à la modification une fois qu'elle est inscrite dans au moins une mémoire secrète du support, sauf pour le/les premier(s) code(s) de cette liste qui peut(peuvent) être consulté(s), utilisé(s) par exemple pour une authentification dans un échange. De par la conception du support, chaque code ne peut être utilisé qu'un nombre limité de fois et de préférence une seule fois après quoi il peut être écarté, effacé ou rendu inaccessible et c'est le/les code(s) suivant(s) de ladite liste qui est(sont) utilisable(s) et chaque fois sous certaines conditions décrites plus loin.

Des modes de réalisation différents, pour réaliser une authentification d'un support ou d'une entité, sont définis ci-après à partir de l'utilisation d'au moins une mémoire secrète et de codes utilisables de préférence un nombre limité de fois ou une seule fois lors d'un échange:
1°) au moins un code est utilisé pour un échange, le premier de ladite liste puis le code suivant dans ladite liste et ainsi de suite,
2°) plusieurs codes sont utilisés pour un échange, extraits un par un ou par groupes et toujours chaque code extrait succède dans ladite liste au code précédemment extrait,
3°) c'est au moins une zone secrète associée à au moins une mémoire secrète du système du support qui détermine la recherche ou le choix aléatoire d'un/des code(s), par un algorithme n'utilisant pas une incrémentation pour choisir, déterminer le/les code(s) suivant(s), dans ladite/lesdites liste(s) et qui adresse le/les code(s) choisi(s) à au moins une autre entité intervenante ainsi que les indications complémentaires permettant de comparer ce/ces code(s) à celui(ceux) dont les indications correspondent dans la propre liste de l'autre entité ou des autres entités;
   la zone secrète n'est, de préférence, pas modifiable ni accessible à la consultation et/ou à la manipulation extérieure(s), il ne peut pas en être extrait des données autres que celles qu'il est prévu d'extraire,
   on ne peut transformer le fonctionnement de la mémoire secrète ni en extraire des données autres que celles qu'il est prévu que cette mémoire secrète peut fournir ni extraire des données autrement qu'il est prévu que ladite mémoire les fournisse;
   lesdites indications complémentaires accompagnant le/les code(s) sont par exemple la/les position(s) dans la/les liste(s), le/les numéro(s) ou les coordonnées ou le/les repère(s) de ce(s) code(s),
4°) le dispositif est identique à celui du 3° ci-dessus sauf en ce qui concerne la recherche d'un/des code(s) qui ne se fait pas de manière aléatoire mais en suivant un plan particulier préétabli ou établi lors de l'échange dont le déroulement est contenu ou peut être établi, créé, dans au moins une zone secrète du support et dans le système informatique de l'autorité et/ou d'au moins une autre entité.
De préférence uniquement dans les deux derniers modes de réalisation ci-dessus (3° et 4°) les codes sont disposés de manière aléatoire ou rangés ou ordonnés selon certains critères, les indications complémentaires permettant de retrouver et de comparer chaque code à au moins un code d'au moins une autre liste témoin sont échangées grâce à un seul échange, celui contenant aussi les données classiques d'un échange comme par exemple un message, ou dans un/des échange(s) différent(s) ou fragmentées et réparties en plusieurs échanges afin de rendre encore plus complexe leur consultation même si leur réemploi n'est pas envisagé et si un pirate les interceptant ne peut pas les réutiliser. Pour protéger des données très confidentielles, lesdites indications complémentaires seront adressées à leur destinataire par des voies différentes de celles qui transmettent le contenu d'un message.

Dans ledit premier mode de réalisation, lesdits codes contenus dans au moins une liste se succèdent de manière imprévisible, pour un observateur extérieur à la mise en place de la liste et à sa confidentialité, sont conçus par exemple de manière aléatoire grâce à un logiciel dont dispose l'autorité qui réalise et qui dispose des codes dans deux listes identiques, l'une est inscrite sur un support qui sera fourni à un porteur autorisé, connu de l'autorité, l'autre reste en mémoire dans le système informatique de l'autorité afin de permettre la comparaison d'au moins un code, au code correspondant dans l'autre liste. Une telle disposition aléatoire d'un grand nombre de codes permet de réaliser avec le même logiciel un grand nombre de listes différentes les unes des autres attribuables à un grand nombre de porteurs.
Ledit support permet d'échanger des données informatiques servant à l'autorité à authentifier le support pour ensuite échanger des données qui peuvent être confidentielles, qui engagent les intervenants qui peuvent être par exemple propres à une entreprise qui correspond avec ses succursales ou tout autre type d'échange de données que l'on veut garder confidentielles ce qui permet notamment de sécuriser un paiement sur place, sur le lieu de la transaction grâce au support utilisé dans ce but ou de sécuriser un télépaiement réalisé par exemple grâce à un ordinateur relié à un réseau informatique.
Dans le cas où les données sont confidentielles, un codage ou un cryptage sont de préférence utilisés avec un degré plus ou moins élévé du niveau de confidentialité tout en respectant la règlementation du(des) Etat(s) où ces données doivent circuler.
De préférence et contrairement au mode de fonctionnement du support, le système informatique de l'autorité peut consulter les codes précédents et les codes suivants dans sa propre mémoire lors d'un échange afin d'éviter un blocage de ce type d'échange si, à la suite d'une mauvaise manipulation du porteur ou une mauvaise transmission des données, un code doit être éliminé pour laisser place au suivant alors que l'autorité n'a pas encore enregistré que ce dernier code a été émis par le support.
Pour éviter une substitution du support émis ou validé par l'autorité par un faux support ayant apparemment le contenu d'un support authentique, en essayant de trouver le bon code en en réalisant un grand nombre et en les proposant un par un à l'autorité, au bout d'un certain nombre de tentatives qui ne fournissent pas le bon code, nombre prédéterminé en accord avec le porteur authentique, le système informatique de l'autorité peut bloquer l'utilisation de ce support, en informer par exemple le commerçant auprès duquel un paiement est en cours ou conserver le support si la tentative se fait auprès d'un distributeur de billets par exemple. Après un blocage de ce type, le support peut être définitivement inutilisable ou bien le porteur devra fournir la preuve de son identité en se rendant physiquement auprès de l'autorité pour constater qu'il est bien le porteur autorisé et débloquer l'utilisation de ce support dans le système informatique de l'autorité. Cette contrainte est en réalité une mesure de sécurité contre l'utilisation d'un faux support au nom d'un porteur autorisé et à son insu. Pour le porteur autorisé ce type de blocage ne devrait jamais être appliqué dans un usage normal du support.
Par cette caractéristique des listes identiques sur le support et dans le système informatique de l'autorité, celle-ci élimine les risques:
- d'utilisation et de paiement avec un faux support,
- d'un télépaiement délictueux en ayant piraté les données numériques échangées, lors d'un paiement ou d'un télépaiement précédent, entre un support et une autorité.
Quel que soit le degré de technologie mis en oeuvre pour un tel piratage, le code utilisé pour un paiement ou un télépaiement avec un support sécurisé comme décrit plus haut étant utilisé et donc consultable, de préférence, seulement pour un seul échange et n'étant plus valable pour un autre échange, les données piratées sont inexploitables. Si le code est utilisable plusieurs fois la sécurisation est moins efficace.
Cependant un piratage évolué, lors d'un paiement, pourrait consister à détourner la voie de communication entre le commerçant et la banque. A la prise de contact du commerçant avec la banque du porteur, la communication parviendrait en fait à une fausse banque qui pourrait interroger le support présenté, en extraire le premier code, renvoyer au commerçant de fausses données d'acceptation du paiement pour ne pas donner l'éveil même si ce paiement n'a pas lieu et utiliser immédiatement le code fourni par le support pour une autre transaction au détriment du porteur ou du commerçant ou de la banque selon les accords préalables entre les participants.
Bien que ce type d'agissement demande une haute technicité, il est bon de s'en prémunir par exemple en dotant le commerçant d'un système semblable à celui décrit plus haut comportant au moins un couple de deux listes identiques de codes dont on ne peut consulter de préférence qu'un code ou un nombre limité de codes à la fois mais dans cette utilisation des listes de codes c'est le commerçant qui est l'autorité afin de reconnaître, d'authentifier la banque du porteur. Les banques désirant participer à cette sécurisation peuvent aussi s'authentifier mutuellement, lors de leurs échanges en employant aussi des listes de codes comme décrit plus haut.
Tous les intervenants sont ainsi authentifiés mutuellement ce qui évite un échange avec un faux participant. Seul le porteur ne semble pas avoir d'indications fiables d'authentification ni du commerçant ni de la banque, il se fie aux indications fournies par le commerçant ou par un moniteur de caisse de celui-ci mais en fait le paiement ne peut être effectué que si la banque a authentifié son support ce qui équivaut pour le porteur à avoir authentifié sa banque si son compte est débité.
Pour augmenter la sécurisation du support objet de l'invention, le système peut permettre d'utiliser plusieurs codes au cours d'une même opération. Ces codes sont issus d'au moins une liste, un par un et dans l'ordre où ils sont inscrits sur le support comme décrit plus haut. S'il paraît peu probable de découvrir par le hasard quel est le bon code à un moment donné dans le déroulement de l'utilisation du support, il paraît impossible de découvrir, également par hasard, plusieurs codes successifs dans l'ordre où ils sont inscrits.
Par souci d'une utilisation simple du système il est préférable que chaque opération d'authentification soit réalisée automatiquement par chaque terminal de chaque participant.

Le dispositif selon l'invention se compose d'un support ayant les caractéristiques particulières décrites soit plus haut soit dans les diverses variantes et/ou d'un système d'exploitation dans lequel intervient au moins un support tel que décrit, le système informatique de l'autorité en combinaison, lorsque c'est nécessaire, avec des lecteurs de supports et/ou des moyens de transmission et de traitement de données informatiques nécessaires à un échange.

Plusieurs variantes sont décrites ci-après dans lesquelles le support possède dans tous les cas la caractéristique de base qui est la présence d'au moins une liste de codes contenue dans au moins une mémoire secrète.

Selon une première variante, au moins une liste de codes est complétée ou remplacée par au moins un algorithme capable de créer des codes utilisables au fur et à mesure de la nécessité résultant de l'utilisation du support. Au moins un algorithme installé dans le système informatique de l'autorité crée les mêmes codes pour les comparer à ceux du support quand un échange avec ce support nécessite par exemple une authentification dudit support. De préférence ledit(lesdits) algorithme(s) n'est(ne sont) pas consultable(s) ou transformable(s) à partir du moment où il(s) est(sont) inscrit(s) dans le support.

Selon une autre variante, les données autres que les codes, concernant un échange, une opération en clair, codée ou cryptée peuvent être associées par le support ou par le système informatique avec lequel il communique, émetteur ou récepteur, à au moins un code d'au moins une liste de codes inscrite sur le support ce qui rend les données difficilement falsifiables et ce qui permet de coder un échange en clair. L'autorité étant la seule à connaître le ou les codes employés pour décoder cet échange, étant entendu que ces codes aussi sont de préférence différents à chaque échange. Pour une opération consistant en un paiement c'est l'assurance pour le porteur comme pour le commerçant que les données comme les conditions d'une commande, la référence d'un produit, le montant d'un paiement ne peuvent pas être modifiés au cours de l'échange.

Selon une autre variante le support n'est utilisable pour des échanges de données et/ou des télépaiements sécurisés que depuis un nombre réduit d'ordinateurs ou de lecteurs de supports ou de périphériques de raccordement à au moins un réseau, et de préférence un seul de ces dispositifs, par exemple son ordinateur personnel ou un ordinateur spécifique d'une entreprise, local, pour échanger, avec un autre dispositif informatique qui peut être éloigné. La lecture et l'exploitation dudit support nécessite un échange de données entre ledit support et l'ordinateur ou le lecteur ou le périphérique auquel il est lié induisant une reconnaissance mutuelle des deux éléments sans laquelle le support ne fournit pas les données qu'il possède et qui sont nécessaires à un échange avec un autre dispositif informatique afin de réaliser une opération particulière notamment un paiement. C'est seulement après cette authentification mutuelle que le support est utilisable, via cet ordinateur ou ce lecteur spécifique ou ce périphérique, pour échanger avec un autre dispositif informatique, au besoin en effectuant avec ce dernier une authentification ou une authentification mutuelle. Le support est de préférence un disque qui peut être lu par un lecteur faisant partie intégrante de l'ordinateur ou par un lecteur spécifique raccordé à cet ordinateur ce qui permet de donner au support la forme et l'apparence les plus diverses en plus de celles d'un disque. On limite ainsi le risque de vol du support qui peut être utilisé et conservé en un même lieu qui peut n'être accessible qu'à l'utilisateur.
Le support qui n'est reconnu que par un seul matériel informatique auquel il est associé ne peut être utilisé à partir d'un autre matériel même d'un type identique.

Selon une autre variante, la possibilité d'utiliser le support est subordonnée à l'entrée d'au moins un code personnel propre à chaque porteur, secret, proposé au système du support grâce à un lecteur intégré dans le support ou par un lecteur classique ou par un ordinateur sans lecteur extérieur, à chaque utilisation, afin d'être reconnu par le support qui autorise le porteur à poursuivre sa procédure en vue d'un échange complet. Ledit code personnel varie dans le temps en tout ou partie suivant des modes que le porteur est seul à connaître, et éventuellement l'autorité qui délivre le support, et que le support reconnaît. Les variations sont choisies par le porteur avant la création du support parce qu'elles sont facilement mémorisables par le porteur en fonction, par exemple, de sa date de naissance, des jours ou des heures pairs ou impairs, des lettres d'un nom connu du porteur... Malgré ces variations, à un moment donné, un seul code personnel est valable et accepté par le support. Les variations et les transformations du code personnel sont mémorisées par l'utilisateur et, d'autre part, mémorisées dans le support mais elles restent dans le support qui ne les indique pas par un écran et on ne peut les extraire du support de quelque manière que ce soit.

Selon une autre variante, au moins un code piégé peut bloquer l'utilisation du support. Certains porteurs inscrivent leur code personnel près de leur support, dans le cas d'une carte bancaire par exemple, pour le retrouver facilement en cas d'oubli. Malheureusement en cas de vol du support, il est probable que le voleur saura dans ce cas retrouver le code personnel pour utiliser délictueusement le support. Ledit code piégé est à inscrire de préférence sur le support ou à proximité, par exemple dans le portefeuille qui le contient. En cas d'utilisation d'un support volé avant que le porteur autorisé n'ait procédé aux formalités en vue de bloquer l'utilisation de ce support, si le voleur utilise ce code, comme un code personnel, ledit code est transmis à l'autorité qui interdit aussitôt toute opération en cours et à venir réalisée avec ce support et prévient le commerçant, s'il s'agit d'une opération de paiement auprès d'un commerçant que ce support est certainement volé; s'il s'agit d'une tentative d'utilisation dans une machine automatique comme un distributeur de billets, l'opération est refusée et le support peut être retenu bien que désormais inutilisable. S'il s'agit d'une erreur due à une manipulation du porteur authentique, ce dernier doit se rapprocher physiquement de l'autorité pour faire la preuve de son identité afin que l'utilisation de son support soit débloquée dans le système informatique de ladite autorité.

Selon une autre variante un dispositif de détection est associé au système pour s'assurer que chaque échange est transmis en totalité, en temps réel et sans interruption pour éviter qu'un échange puisse être soit en partie détourné, soit intercepté, modifié et réexpédier plus tard, soit intercepté, modifié et réexpédié en temps réel ou quasiment ce qui est plus difficile à réaliser. Ledit dispositif de détection, par exemple, émet au moins un signal qui peut être un signal d'horloge direct ou indirect ou tout autre signal ayant la même fonction associé à tout ou partie des données d'un échange afin que ces données soient liées entre elles, identifiables et indissociables sauf en laissant une trace. Le système informatique de l'autorité détecte toute anomalie et peut réagir par exemple en demandant une confirmation ou en refusant l'authentification et le contenu de l'échange ou en refusant le paiement s'il s'agit d'une procédure de paiement.

Selon une variante complémentaire de la variante précédente, les caractéristiques du signal(des signaux) d'horloge ou de tout autre signal ayant la même fonction, varie(nt) dans un même échange et/ou sont différentes pour chaque échange. Le mode de ces variations est stocké dans une mémoire du support ainsi que dans la mémoire du système informatique de l'autorité qui contrôle la conformité des variations. Pour un observateur extérieur à la confidentialité desdites variations il est impossible de les prévoir ce qui rend impossible la production dudit signal, en temps réel, par un pirate qui tenterait de remplacer des données par de fausses données.
Toujours par souci de sécurisation, le mode desdites variations est de préférence inaccessible à la consultation sur le support même pour l'autorité, il se déroule au fur et à mesure de l'utilisation du support selon un plan préétabli.

Selon une autre variante, comprenant aussi au moins une mémoire secrète, le support ne fournit, lorsqu'il est sollicité directement ou par un lecteur de supports, qu'une quantité de données limitée, de préférence uniquement des données permettant d'interroger l'autorité qui gère l'utilisation dudit support après quoi, dans le déroulement prévu de l'échange, l'autorité adresse vers ledit support des données particulières qui sont de préférence le/les premier(s) code(s) disponible(s) d'au moins une liste de codes dont on ne peut accéder de préférence qu'à un seul code à la fois dans les conditions décrites plus haut, inscrites dans au moins une mémoire dudit support afin que ce dernier poursuive le déroulement de l'échange dès qu'il a reconnu ces données. Lorsque ces données sont reconnues comme venant de l'autorité, le support fournit des données permettant à l'autorité de l'authentifier. Cette variante dans l'utilisation des listes de codes évite en extrayant un code du support d'avoir la possibilité de le détourner sur simple interrogation d'un lecteur de supports.
Si les données fournies au support, pour ouvrir un échange, par l'autorité ne correspondent pas à celles qu'il est prévu qu'il reçoive, ledit support ne continue pas l'échange. Mis à part les cas d'anomalies de fonctionnement dues à des pannes matériels, une telle configuration est certainement la conséquence d'une fausse autorité essayant de s'introduire parmi les intervenants authentiques. Une nouvelle tentative est de préférence possible mais le nombre de tentatives infructueuses autorisées pour une même opération ou pour des opérations successives est limité; après avoir épuisé ce nombre de tentatives, ledit support refuse l'échange et la communication du premier code prévu, reste fermé à tout échange ultérieur et le porteur doit se rapprocher physiquement de l'autorité pour trouver la cause de cette situation et s'assurer que le support fonctionne ou obtenir un autre support. De préférence ledit support est réutilisable au bout d'un laps de temps qui permet au porteur et à l'autorité de déterminer la nature du problème lors du dernier échange.
La tentative de piratage est ainsi vaincue:
Exemples: en supposant un support ayant une seule liste de codes accessibles comme décrit plus haut, pour la compréhension affectons à chaque code du début de cette liste un numéro de 1 à 3. Si le pirate essaie d'intercepter des codes pour accéder à un échange celà se passe ainsi:
1) le pirate, connecté au réseau ou à une ligne téléphonique interroge le support comme s'il était l'autorité, ne connaissant pas le code n°1 que doit fournir l'autorité pour poursuivre l'échange, le support ne poursuit pas l'échange, la tentative de piratage s'arrête là (de préférence cette tentative est signalée à l'autorité au prochain échange avec l'autorité par le support qui a enregistré l'incident).
2) le pirate, connecté au réseau ou à une ligne téléphonique, interroge l'autorité comme s'il était un support autorisé; l'autorité adresse au pirate le code n°1 ( en croyant l'adresser à un support authentique); avec ce code n°1 le pirate intercepte un début d'échange avec le support authentique (ce qui est déjà difficile), lui adresse le code n°1; le support reconnait le code et lui adresse en retour le code n°2 comme une authentification vis-à-vis de la vraie autorité; le pirate possède alors les codes n°1 et n°2 qu'il adresse alors à l'autorité comme venant d'un support autorisé et afin d'effectuer un échange complet, une transaction délictueuse...
   - mais le code n°1 ayant déjà été échangé par l'autorité dans un échange précédent, n'est plus valable, l'autorité demandera au support (qui dans ce cas est le pirate) de lui adresser le code n°3 que le pirate ne possède pas et l'échange ne sera ni certifié ni poursuivi.
   - le pirate peut recommencer sa tentative pour obtenir le code suivant mais chaque fois il lui manquera le dernier code; au bout d'un certain nombre de tentatives de ce genre, de prérérence, le système informatique de l'autorité signale qu'il y a une tentative d'intrusion par tel support.
Dans un mode de fonctionnement encore plus difficile à pénétrer, plusieurs codes sont échangés, expédiés alternativement par les participants avant une authentification mutuelle effective.

Selon une autre variante, comprenant aussi au moins une mémoire secrète, le support ne fournit, lorsqu'il est sollicité directement ou par un lecteur de supports, qu'une quantité de données limitée, de préférence uniquement des données permettant d'interroger l'autorité qui gère l'utilisation dudit support après quoi, dans le déroulement prévu de l'échange, l'autorité adresse vers ledit support des données particulières comme pour la variante précédente mais ici les codes, qui sont extraits un par un ou par groupe(s), sont disposés dans au moins une liste de manière aléatoire ou rangés ou ordonnés selon certains critères, l'action d'adresser alternativement un/des code(s) se faisant au moins une fois, des données complémentaires sont adressées dans un seul échange avec les codes correspondants ou dans un autre échange ou fragmentées dans plusieurs échanges, lesdites données complémentaires indiquant la position desdits codes dans ladite/lesdites liste(s) et/ou leur(s) noméro(s) ou les(leurs) coordonnées et/ou leur(s) repère(s) permettant la comparaison à au moins un code correspondant dans au moins une seconde liste, identique à ladite/lesdites liste(s), mise(s) en mémoire dans le système informatique de ladite autorité ou d'au moins une autre entité.

Selon une autre variante, à l'authentification du support s'ajoute, de préférence, l'identification du porteur c'est-à-dire son identification en tant que porteur autorisé d'un support déterminé.
Un premier moyen d'identification consiste en une photo d'identité intégrée au support de manière indissociable ce qui permet une identification pour un échange sur place par exemple lors d'un paiement chez un commerçant. Un dispositif permettant d'agrandir cette photo par exemple à la taille réelle du visage est à la disposition du commerçant, ou d'un autre contrôleur soit en introduisant ou en présentant le support devant ce dispositif, soit pendant que le support est dans le lecteur de supports afin de réaliser par exemple un paiement.

D'autres moyens permettent une identification du porteur sur place mais aussi à distance comme un lecteur spécialisé pour identifier un oeuil, une empreinte digitale ou un code génétique à partir par exemple de la salive ou effectuant une reconnaissance vocale qui reconnait les paroles et identifie le porteur par comparaison à des voix mémorisées; ces moyens sont sûrs pour identifier un individu mais les données représentant cette identification peuvent être piratées afin d'être utilisées délictueusement c'est pourquoi, de préférence, cette identification s'ajoute à l'authentification du support pour former un ensemble sécurisé. Ledit lecteur spécialisé peut faire partie intégrante du support au moins pour la partie servant à l'identification.

Au support s'ajoute, de préférence, au moins un dispositif secondaire associé au fonctionnement du support lors d'un échange ou de l'amorçage d'un échange. L'intervention dudit dispositif secondaire est indispensable au fonctionnement du support sans quoi celui-ci n'échange pas quelle que soit la sollicitation extérieure. De préférence chaque utilisation du support nécessite l'intervention dudit dispositif secondaire. Mis en relation avec le support, avec ou sans contact électrique, le dispositif secondaire n'est, de préférence, opérant que pendant un laps de temps prédéterminé pendant lequel le support est soit utilisé soit amorcé pour être utilisé le temps nécessaire sans limitation; au delà de ce laps de temps qui peut être par exemple de quelques secondes ou de quelques minutes, ledit support nécessite à nouveau une intervention dudit dispositif secondaire pour échanger ou amorcer un échange.
Même en connaissant le code personnel de l'utilisateur, le vol du support ne peut permettre son utilisation qui doit être associée à celle du dispositif secondaire.

La possession du dispositif secondaire peut être assimilée à une identification dans la mesure où le dispositif secondaire est attaché à son possesseur et peut rester dissimulé, secret tant dans son aspect que dans son lieu de fonctionnement; il peut être personnalisé et, de préférence, intégré dans un objet tout à fait personnel du porteur tel que montre, bracelet, pendentif, ceinture, monture de lunettes. On peut dès aujourd'hui concevoir des objets (montres, ceintures, bijoux...) qui ont un emplacement prévu pour recevoir le dispositif secondaire enfermé dans un logement ou collé par exemple avec une goutte de colle époxy.
Le dispositif secondaire peut aussi être implanté dans le corps de l'utilisateur et de préférence sous la peau pour les utilisateurs qui le désirent. Si au premier abord celà peut paraître étrange, il suffit de penser au nombre d'opérations de chirurgie esthétique qui sont des actes volontaires et bien plus importants en ce qui concerne l'intervention.

La source de courant électrique, rechargeable ou non, destinée au fonctionnement du/des système(s) permettant l'intervention dudit dispositif secondaire par rapport audit support, est disposée dans le dispositif secondaire et/ou dans le support et/ou elle n'est présente que comme source électrique extérieure comme par exemple dans le lecteur de supports et alimente alors l'ensemble lors de l'utilisation du lecteur; dans le cas d'un fonctionnement sans contact électrique, l'alimentation électrique peut aussi provenir d'un courant induit utilisé directement et/ou stocké dans ledit dispositif secondaire et/ou dans le support.

Dans chacune des variantes du dispositif objet de l'invention le support peut être aussi dissimulable même pendant une utilisation qui se fait grâce à un lecteur approprié.
Les dispositifs comportant un support à fonctionnement sans contact électrique sont connus, un des objets de la présente invention consiste à associer un support à fonctionnement sans contact électrique à un dispositif secondaire fonctionnant lui aussi sans contact électrique et agissant comme un contrôleur du support, ce dernier ne pouvant fonctionner lorsque le dispositif secondaire est éloigné, la distance d'éloignement maximum peut être, par exemple, de un mètre. Support et dispositif secondaire peuvent être ensemble ou séparés mais proches lors d'une utilisation.

En ce qui concerne les porte-monnaie électroniques, les problèmes de piratage lors d'un contact avec, par exemple une banque grâce au lecteur d'un commerçant, sont les mêmes que pour une carte à puce classique, les données secrètes échangées doivent être protégées. En tant que support, comme décrit plus haut, tout porte-monnaie électronique peut donc, entre autres, être aussi:
- contrôlé par un dispositif secondaire,
- dissimulable, intégré, associé à un objet personnel,
- implanté dans le corps de l'utilisateur.
La miniaturisation rendant impossible la présence d'un écran, les informations concernant le porte-monnaie sont lues sur un écran d'un lecteur lors d'une opération ou pour en connaître par exemple le contenu sans effectuer d'opération. Ces informations peuvent être écrites et/ou sonores (vocales) ce qui permet l'utilisation d'un porte-monnaie électronique par un non-voyant.

Quelques avantages du dispositif:
- dans un paiement ou un télépaiement c'est la banque ou la tierce partie à qui la banque a délégué son autorité qui décide de donner ou de refuser son accord pour une opération. Etant donné que c'est pratiquement sans risque, une banque peut garantir le bon fonctionnement du système de paiement et de télépaiement et prendre à sa charge tout risque de fraude ce qui est un atout essentiel pour augmenter le nombre de ses clients vis à vis de ce type de paiement.
- un support tel que décrit plus haut ne peut pas être reproduit puisque la liste de codes secrets n'est pas accessible et sans cette liste le support est inutilisable.
- un support volé fonctionnant avec un dispositif secondaire (contrôle du support) ne peut fonctionner, même en connaissant le code personnel de l'utilisateur, puisqu'il est éloigné de ce dispositif secondaire (par exemple à plus d'un mètre, le support ne fonctionne plus).
- en utilisant un support et un dispositif secondaire dissimulables, le risque de vol est pratiquement nul.
- il est avantageux de remplacer les cartes à puce par un support dissimulé.

Le dispositif selon l'invention est destiné à sécuriser les échanges de données informatiques et notamment les paiements ou les télépaiements effectués à partir de supports contenant des informations numériques comme les cartes de paiement à puces classiques, les porte-monnaie électroniques, les disques à lecture numérique.

## Revendications

1. Dispositif pour la sécurisation des échanges de données informatiques en vue notamment d'échanger des données confidentielles et/ou d'effectuer un/des paiement(s) sur place ou un/des télépaiement(s) utilisant des moyens informatiques comportant un support comportant lui-même un système informatique comportant des fonctions permettant, entre autres, de communiquer avec ou sans contact électrique avec un autre système informatique avec lequel il peut échanger des données,
par exemple avec le système informatique de l'autorité qui gère l'utilisation des supports tels que ledit support et/ou d'une autre entité en liaison avec ou sans contact électrique avec un/des moyen(s) de transmission et/ou de traitement de données informatiques nécessaire(s) à au moins un échange,
au moins une zone secrète dans le système dudit support, inaccessible pour en transformer le fonctionnement ou pour en extraire des données autres que celles qu'il est prévu que cette zone peut fournir,
au moins une mémoire secrète dont on ne peut transformer le fonctionnement ni en extraire des données autres que celles qu'il est prévu que cette mémoire peut fournir ni extraire ces données autrement qu'il est prévu qu'elle les fournisse, ladite mémoire secrète associée à ladite zone secrète permettant de stocker des données sous formes de codes servant à l'authentification dudit support par ladite autorité ou par une autre entité et/ou à l'authentification mutuelle entre deux entités utilisant des moyens informatiques dont l'un peut être un support tel que ledit support,
le terme "code" désignant au moins un mot, au sens informatique, et/ou au moins un algorithme et/ou un assemblage de données numériques sous quelque forme que ce soit, permettant d'identifier ou d'être identifié, lors d'un échange, par son apparence, sa forme qui peut être comparée à un assemblage de données numériques témoin,
lesdits codes étant disposés de préférence dans au moins une liste inaccessible à la consultation une fois qu'elle est inscrite dans ladite mémoire secrète sauf pour un ou plusieurs codes extrait(s) un par un ou par groupe(s),
auxquels codes sont associées des données complémentaires indiquant la position desdits codes dans la/les liste(s) et/ou leur(s) numéro(s) ou leurs coordonnées et/ou leur(s) repère(s) afin de permettre la comparaison à au moins un code correspondant dans au moins une seconde liste, identique à ladite liste, mise en mémoire dans le système informatique de ladite autorité ou d'au moins une autre entité, lesdits codes étant disposés de manière aléatoire ou rangés ou ordonnés selon certains critères,
caractérisé en ce que lesdites données complémentaires associées aux codes sont adressées dans un seul échange différent de celui contenant lesdits codes correspondants ou sont fragmentées dans plusieurs échanges,
lesdits codes étant choisis:
- de manière aléatoire grâce à un algorithme n'utilisant pas une incrémentation pour choisir le/les code(s) pour le/les échange(s) suivant(s),
- ou selon un plan préétabli,
- ou selon un plan établi lors d'un échange,
ce plan étant contenu dans au moins une zone secrète du système du support et au moins dans le système informatique de l'autorité ou de l'entité avec laquelle ledit support doit effectuer une authentification ou une authentification mutuelle.

2. Dispositif selon la revendication 1, ou dont lesdits codes sont disposés dans au moins une liste inaccessible à la consultation une fois qu'elle est inscrite dans ladite mémoire secrète sauf pour le/les premier(s) code(s) de ladite liste qui peut(peuvent) être utilisé(s) de préférence une fois et une fois seulement, pour sécuriser un échange, après quoi il(s) est(sont) écarté(s) ou effacé(s) ou rendu(s) inacessible(s) et c'est le/les code(s) suivant(s) de ladite liste qui est(sont) alors le(s) seul(s) à pouvoir être consulté(s), utilisé(s) comme code(s) pour le même échange ou pour un autre échange,
lesdits codes, se succédant de préférence de manière imprévisible pour un observateur extérieur à la confidentialité de leur composition et de leur disposition, étant conçus et disposés de préférence de manière aléatoire par un logiciel et de préférence c'est le même logiciel qui crée au moins une seconde liste identique à ladite liste inscrite dans ledit support,
ladite seconde liste étant mise en mémoire dans le système informatique de ladite autorité ou d'au moins une autre entité afin de permettre la comparaison d'au moins un code au code correspondant dans l'autre liste.
caractérisé en ce que ledit support n'est utilisable qu'avec un petit nombre de matériels informatiques tels que ordinateurs ou lecteurs de supports ou périphériques de raccordement à au moin un réseau, et de préférence avec un seul de ces matériels, local, avec lequel(lesquels) il doit effectuer une reconnaissance ou une authentification mutuelle avant de pouvoir effectuer un échange, via cet ordinateur ou ce lecteur ou ce périphérique spécifique, avec d'autres matériels qui peuvent être éloignés, cet échange commençant de préférence par une authentification ou une authentification mutuelle.

3. Dispositif selon l'une quelconque des revendications précédentes,caractérisé en ce que chaque utilisation du support est subordonnée à l'introduction dans le système dudit support et à son acceptation d'au moins un code personnel propre audit support et au porteur authentique dudit support, ledit code personnel étant en tout ou partie variable dans le temps, les variations étant secrètes sauf pour ledit porteur et éventuellement l'autorité qui délivre ledit support, lesdites variations et les transformations dudit code personnel sont mémorisées par l'utilisateur et, d'autre part mémorisées dans le support et elles restent dans ledit support qui ne les indique pas par un écran et on ne peut les extraire dudit support de quelque manière que ce soit.

4. Dispositif selon l'une quelconque des revendications précédentes, caractérisé en ce qu'en cas d'utilisation d'un code particulier comme s'il s'agissait du code personnel de l'utilisateur pour utiliser un support volé, ledit code déclenche le blocage de l'utilisation dudit support dans le système informatique de ladite autorité, soit définitivement soit provisoirement.

5. Dispositif selon l'une quelconque des revendications précédentes et dont un dispositif adjoint au système d'exploitation produit au moins un signal qui peut être un signal d'horloge direct ou indirect qui est associé à tout ou partie des données d'un échange, le système informatique de ladite autorité détectant, dans un échange grâce audit dispositif adjoint, toute anomalie dans l'échange des données pouvant indiquer une modification des données elles mêmes, caractérisé en ce que les caractéristiques dudit signal(desdits signaux) varient dans un même échange et/ou pour chaque échange, les modes de variations étant de préférence en mémoire et inaccessibles dans ledit support et dans ledit système informatique de ladite autorité.

6. Dispositif selon l'une quelconque des revendications précédentes, caractérisé en ce que ledit support ne fournit, lorsqu'il est sollicité directement ou par un lecteur de support, que les données permettant d'interroger ladite autorité qui gère l'utilisation dudit support ou au moins une autre entité, ladite autorité ou ladite entité devant adresser au dit support des données particulières pour que l'échange puisse se poursuivre, faute de quoi ledit support ne continue pas l'échange, ces données particulières étant de préférence:
- soit le/les premier(s) code(s) d'au moins une liste de codes inscrite dans ledit support dans au moins une mémoire secrète dont on ne peut transformer le fonctionnement ni en extraire des données autres que celles qu'il est prévu que cette mémoire peut fournir ni extraire ces données autrement qu'il est prévu qu'elle les fournisse, inaccessible, sauf à accéder au(x) premier(s) code(s) de ladite liste qui peut(peuvent) être utilisé(s) de préférence une fois et une fois seulement, pour sécuriser un échange, après quoi il(s) est(sont) écarté(s) ou effacé(s) ou rendu(s) inacessible(s) et c'est le/les code(s) suivant(s) de ladite liste qui est(sont) alors le(s) seul(s) à pouvoir être consulté(s), utilisé(s) comme code(s) pour le même échange ou pour un autre échange, lesdits codes, se succédant de préférence de manière imprévisible pour un observateur extérieur à la confidentialité de leur composition et de leur disposition, étant conçus et disposés de préférence de manière aléatoire par un logiciel et de préférence c'est le même logiciel qui crée au moins une seconde liste identique à ladite liste inscrite dans ledit support,
ladite seconde liste étant mise en mémoire dans le système informatique de ladite autorité ou d'au moins une autre entité afin de permettre la comparaison d'au moins un code au code correspondant dans l'autre liste.
- soit un/des code(s) extrait(s) un par un ou par groupe(s) d'au moins une liste de codes inscrite dans au moins une mémoire secrète dudit support et des données complémentaires indiquant leur position dans la/les liste(s) et/ou leur(s) numéro(s) ou ses(leurs) coordonnées et/ou son(ses)/leurs repère(s), lesdites données complémentaires pouvant être adressées dans un seul échange avec les codes correspondants ou dans un autre échange ou fragmentées dans plusieurs échanges,
afin de permettre la comparaison à au moins un code correspondant dans au moins une seconde liste, identique à ladite liste, mise en mémoire dans le système informatique de ladite autorité ou d'au moins une autre entité, lesdits codes étant disposés de manière aléatoire ou rangés ou ordonnés selon certains critères,
lesdits codes étant choisis de manière aléatoire ou selon un plan prééabli ou selon un plan établi lors d'un échange, ce plan étant contenu dans au moins une zone secrète du système dudit support et au moins dans le système informatique de ladite autorité ou de ladite entité,
après avoir reconnu lesdites données particulières et authentifié l'émetteur, ledit support adresse à son tour des données à ladite autorité ou à ladite entité pour être à son tour authentifié, l'action d'adresser alternativement des codes se faisant au moins une fois, l'échange peut alors se poursuivre entre les deux entités mutuellement authentifiées, en cas d'échec d'une authentification, une nouvelle tentative est possible, le nombre de tentatives étant de préférence limité.

7. Dispositif pour la sécurisation des échanges de données informatiques en vue notamment d'échanger des données confidentielles et/ou d'effectuer un/des paiement(s) sur place ou un/des télépaiement(s) utilisant des moyens informatiques comportant un support comportant lui-même un système informatique comportant des fonctions permettant, entre autres, de communiquer avec ou sans contact électrique avec un autre système informatique avec lequel il peut échanger des données, réaliser une opération complète comme un paiement, ou une autorisation d'accès,
ledit support étant par exemple une carte à puce classique servant à effectuer un paiement à distance, ou un porte monnaie électronique, ou un support selon l'une quelconque des revendications précédentes,
caractérisé en ce que l'identification du porteur d'un support tel que ledit support se fait grâce à un dispositif secondaire indispensable à l'utilisation dudit support avant ou pendant un échange de données ou à l'amorçage d'un échange, avec ou sans contact électrique avec ledit support, ledit dispositif secondaire étant de préférence dissimulable, de préférence intégré dans un objet personnel dudit porteur et/ou en un lieu qui peut n'être connu que par ledit porteur même pendant l'utilisation dudit dispositif secondaire.

8. Dispositif selon la revendication 7 caractérisé en ce que ledit support et ledit dispositif secondaire fonctionnent sans contact électrique ni entre eux ni avec un autre dispositif sont dissimulables tous les deux, de préférence, associés séparément ou ensemble à un/des objet(s) personnel(s) et/ou sont en un lieu qui peut n'être connu que par ledit porteur même pendant leur utilisation qui se fait grâce à un lecteur approprié.

9. Dispositif selon l'une quelconque des revendications précédentes caractérisé en ce que ledit support et/ou ledit dispositif secondaire qui est/sont utilisable(s) sans contact électrique est/sont implanté(s) dans le corps de l'utilisateur, de préférence sous la peau, leur utilisation se faisant grâce à un lecteur approprié.

10. Dispositif selon l'une quelconque des revendications précédentes caractérisé par un système d'exploitation qui utilise au moins un support tel que ledit support, seul ou en combinaison avec d'autres moyens comme le système informatique d'une autorité et/ou d'une autre entité et/ou des moyens de transmission et de traitement de données informatiques nécessaires à un échange.
